# EUROPEAN PATENT APPLICATION

(11) **EP 4 664 982 A1**
(43) Date of publication of application: **17.12.2025**
(21) Application number: 23920547.9
(22) Date of filing: 10.02.2023
(51) Int. Cl.: H04W 28/02

(54) **METHOD AND APPARATUS FOR SUBSCRIBING TO QOS MONITORING RESULT, AND COMMUNICATION DEVICE AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Stöckeler, Ferdinand
(86) International application number: PCT/CN2023/075533
(87) International publication number: WO 2024/164340

(57) **Abstract**

Provided in the embodiments of the present disclosure is a method for subscribing to a quality of service (QoS) monitoring result. The method is executed by means of a first network function, and the method comprises: sending first request information to a second network function, wherein the first request information is used for requesting the subscription to a QoS monitoring result obtained by monitoring the QoS of at least two service data flows (SDFs). Since the first network function sends to the second network function the first request information for requesting the subscription to the QoS monitoring result, which is obtained by monitoring the QoS of the at least two SDFs, the first network function can acquire the QoS monitoring result, which is sent by the second network function with regard to the first request information. Compared with a situation whereby the QoS monitoring result cannot be obtained, collaboration between multiple SDFs can be accurately executed on the basis of the QoS monitoring result.

## Description

### TECHNICAL FIELD

The disclosure relates to, but is not limited to, the field of wireless communication technology, and in particular to a method for subscribing to quality of service (QoS) monitoring measurements, a related apparatus, a related communication device and a related storage medium.

### BACKGROUND

The Extended Reality Media (XRM) service needs to comprehensively consider the service-related data flow quality of service (QoS) characteristics. The QoS authorization and execution need to be coordinated and consistent between multiple XRM data flows of a terminal and between XRM data flows of multiple terminals. In related arts, an application function (AF) is supported to achieve the QoS perception and coordination between XRM service data flows, and a corresponding session may be updated to ensure the consistency of the XRM service QoS policy in non-real time. However, actual QoS requirements of service data flows (SDFs) and a real-time multi-flow QoS coordination status in a network cannot be perceived, and the coordination between multiple data flows cannot be accurately achieved.

### SUMMARY

Embodiments of the disclosure provide methods and apparatuses for subscribing to quality of service (QoS) monitoring measurements, a related communication device and a related storage medium.

In a first aspect according to an embodiment of the disclosure, a method for subscribing to QoS monitoring measurements is provided. The method is performed by a first network function. The method includes sending first request information to a second network function, in which the first request information is used for requesting a subscription to the QoS monitoring measurements obtained by monitoring QoS of at least two service data flows (SDFs).

In a second aspect according to an embodiment of the disclosure, a method for subscribing to QoS monitoring measurements is provided. The method is performed by a second network function, and the method includes receiving first request information sent by a first network function, in which the first request information is used for requesting a subscription to the QoS monitoring measurements obtained by monitoring QoS of at least two service data flows (SDFs).

In a third aspect according to an embodiment of the disclosure, a method for subscribing to QoS monitoring measurements is provided. The method is performed by a third network function, and the method includes receiving authorized QoS monitoring policy information sent by a second network function, in which the authorized QoS monitoring policy information is used for monitoring QoS of at least two service data flows (SDFs).

In a fourth aspect according to an embodiment of the disclosure, a method for subscribing to QoS monitoring measurements is provided. The method is performed by a fourth network function, and the method includes sending QoS monitoring measurements to a third network function, in which the QoS monitoring report carries the QoS monitoring measurements obtained by monitoring QoS of at least two service data flows (SDFs).

In a fifth aspect according to an embodiment of the disclosure, a system is provided. The system includes a first network function, a second network function, a third network function and a fourth network function; in which the first network function is configured to implement the method performed by the first network function in the disclosure; the second network function is configured to implement the method performed by the second network function in the disclosure; the third network function is configured to implement the method performed by the third network function in the disclosure; and the fourth network function is configured to implement the method performed by the fourth network function 184 in the disclosure.

In a sixth aspect according to an embodiment of the disclosure, an apparatus for subscribing to QoS monitoring measurements is provided. The apparatus includes: a sending module configured to send first request information to a second network function, in which the first request information is used for requesting a subscription to the QoS monitoring measurements obtained by monitoring QoS of at least two service data flows (SDFs).

In a seventh aspect according to an embodiment of the disclosure, an apparatus for subscribing to QoS monitoring measurements is provided. The apparatus includes: a receiving module configured to receive first request information sent by a first network function, in which the first request information is used for requesting a subscription to the QoS monitoring measurements obtained by monitoring QoS of at least two service data flows (SDFs).

In an eighth aspect according to an embodiment of the disclosure, an apparatus for subscribing to QoS monitoring measurements is provided. The apparatus includes: a receiving module configured to receive authorized QoS monitoring policy information sent by a second network function, in which the authorized QoS monitoring policy information is used for monitoring QoS of at least two service data flows (SDFs).

In a ninth aspect according to an embodiment of the disclosure, an apparatus for subscribing to QoS monitoring measurements is provided. The apparatus includes: a sending module configured to send a QoS monitoring report to a third network function, in which the QoS monitoring report carries the QoS monitoring measurements obtained by monitoring QoS of at least two service data flows (SDFs).

In a tenth aspect according to an embodiment of the disclosure, a communication device is provided. The communication device includes: a processor and a memory for storing instructions executable by the processor; in which the processor is configured to perform the method described in any embodiment of the disclosure when running the executable instructions.

In an eleventh aspect according to an embodiment of the disclosure, a computer storage medium is provided. The computer storage medium stores a computer executable program, and when the executable program is executed by a processor, the method described in any embodiment of the disclosure is implemented.

In the embodiments of the disclosure, the first request information is sent to the second network function. The first request information is used for requesting the subscription to the QoS monitoring measurements obtained by monitoring the QoS of at least two SDFs. Here, since the first network function sends to the second network function the first request information for requesting the subscription to the QoS monitoring measurements obtained by monitoring the QoS of the at least two SDFs, the first network function may obtain the QoS monitoring measurements sent by the second network function with respect to the first request information, such that compared with a situation where the QoS monitoring measurements cannot be obtained, the coordination between SDFs may be accurately performed based on the QoS monitoring measurements.

### BRIEF DESCRIPTION OF THE DRAWINGS

FIG. 1A is a schematic diagram illustrating the structure of a wireless communication system according to an example embodiment.
FIG. 1B is a schematic flowchart illustrating a method for subscribing to QoS monitoring measurements according to an example embodiment.
FIG. 2 is a schematic flowchart illustrating a method for subscribing to QoS monitoring measurements according to an example embodiment.
FIG. 3 is a schematic flowchart illustrating a method for subscribing to QoS monitoring measurements according to an example embodiment.
FIG. 4 is a schematic flowchart illustrating a method for subscribing to QoS monitoring measurements according to an example embodiment.
FIG. 5 is a schematic flowchart illustrating a method for subscribing to QoS monitoring measurements according to an example embodiment.
FIG. 6 is a schematic flowchart illustrating a method for subscribing to QoS monitoring measurements according to an example embodiment.
FIG. 7 is a schematic flowchart illustrating a method for subscribing to QoS monitoring measurements according to an example embodiment.
FIG. 8 is a schematic flowchart illustrating a method for subscribing to QoS monitoring measurements according to an example embodiment.
FIG. 9 is a schematic flowchart illustrating a method for subscribing to QoS monitoring measurements according to an example embodiment.
FIG. 10 is a schematic flowchart illustrating a method for subscribing to QoS monitoring measurements according to an example embodiment.
FIG. 11 is a schematic flowchart illustrating a method for subscribing to QoS monitoring measurements according to an example embodiment.
FIG. 12 is a schematic flowchart illustrating a method for subscribing to QoS monitoring measurements according to an example embodiment.
FIG. 13 is a schematic flowchart illustrating a method for subscribing to QoS monitoring measurements according to an example embodiment.
FIG. 14 is a schematic flowchart illustrating a method for subscribing to QoS monitoring measurements according to an example embodiment.
FIG. 15 is a schematic flowchart illustrating a method for subscribing to QoS monitoring measurements according to an example embodiment.
FIG. 16 is a schematic flowchart illustrating a method for subscribing to QoS monitoring measurements according to an example embodiment.
FIG. 17 is a schematic flowchart illustrating a method for subscribing to QoS monitoring measurements according to an example embodiment.
FIG. 18 is a schematic flowchart illustrating a method for subscribing to QoS monitoring measurements according to an example embodiment.
FIG. 19 is a schematic diagram illustrating a system according to an example embodiment.
FIG. 20 is a schematic diagram illustrating an apparatus for subscribing to QoS monitoring measurements according to an example embodiment.
FIG. 21 is a schematic diagram illustrating an apparatus for subscribing to QoS monitoring measurements according to an example embodiment.
FIG. 22 is a schematic diagram illustrating an apparatus for subscribing to QoS monitoring measurements according to an example embodiment.
FIG. 23 is a schematic diagram illustrating an apparatus for subscribing to QoS monitoring measurements according to an example embodiment.
FIG. 24 is a schematic diagram illustrating the structure of a terminal according to an example embodiment.
FIG. 25 is a block diagram illustrating a base station according to an example embodiment.

### DETAILED DESCRIPTION

Example embodiments will be described in detail herein, examples of which are shown in the accompanying drawings. When the following description relates to the drawings, the same numbers in different drawings represent the same or similar elements unless otherwise indicated. The implementations described in the following example embodiments do not represent all implementations consistent with the embodiments of the disclosure. Instead, they are merely examples of apparatuses and methods consistent with some aspects of the embodiments of the disclosure as detailed in the appended claims.

The terms used in the embodiments of the disclosure are only for the purpose of describing specific embodiments and are not intended to limit the embodiments of the disclosure. The singular forms of "a" and "the" used in the embodiments of the disclosure and the appended claims are also intended to include plural forms unless the context clearly indicates other meanings. It should also be understood that the term "and/or" used herein refers to and includes any or all possible combinations of one or more associated listed items.

It should be understood that although the terms "first," "second," "third," etc. may be used to describe various information in the embodiments of the disclosure, but these information should not be limited to these terms. These terms are only used to distinguish the same type of information from each other. For example, without departing from the scope of the embodiments of the disclosure, the "first information" may also be referred to as the "second information", and similarly, the "second information" may also be referred to as the "first information". Depending on the context, the word "if" as used herein may be interpreted as "at the time of," "when" or "in response to determining".

For the purpose of brevity and ease of understanding, the terms "greater than" or "less than" are used herein to characterize size relationships. However, those skilled in the art may understand that the term "greater than" also covers the meaning of "greater than or equal to", and the term "less than" also covers the meaning of "less than or equal to".

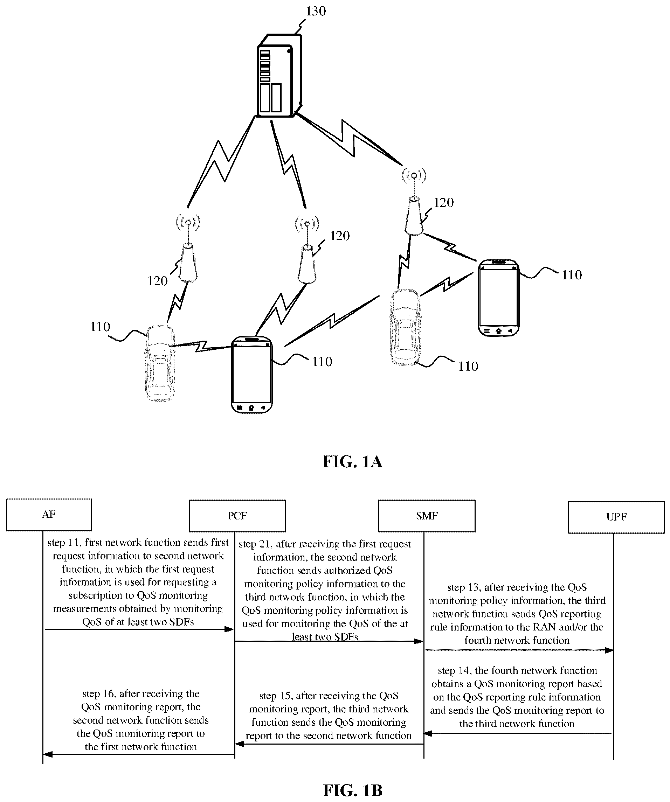

FIG. 1A is a schematic diagram illustrating the structure of a wireless communication system according to an embodiment of the disclosure. As illustrated in FIG. 1, the wireless communication system is a communication system based on mobile communication technology, and the wireless communication system may include: a plurality of user equipment 110 and a plurality of base stations 120.

The user equipment 110 may be a device that provides voice and/or data connectivity to a user. The user equipment 110 may communicate with one or more core networks via a radio access network (RAN). The user equipment 110 may be an Internet of Things user equipment, such as a sensor device or a mobile phone, or may be a computer with the Internet of Things user equipment, such as a fixed, portable, pocket-sized, handheld, computer-built-in or vehicle-mounted device. For example, the user equipment 110 may be a station (STA), a subscriber unit, a subscriber station, a mobile station, a mobile, a remote station, an access point, a remote terminal, an access terminal, a user terminal, a user agent, a user device, or a user equipment. Or the user equipment 110 may be a device of an unmanned aerial vehicle. Or the user equipment 110 may be a vehicle-mounted device, such as a driving computer with wireless communication function or wireless user equipment connected to an external driving computer. Or the user equipment 110 may be a roadside device, such as a street lamp, a signal lamp, or other roadside device with a wireless communication function.

The base station 120 may be a network-side device in a wireless communication system. The wireless communication system may be a fourth generation mobile communication technology (4G) system, also known as a long term evolution (LTE) system; or the wireless communication system may be a fifth generation mobile communication technology (5G) system, also known as a new air interface system or a 5G new radio (NR) system. Or the wireless communication system may be a next generation system of the 5G system. The access network in the 5G system may be referred to as New Generation-Radio Access Network (NG-RAN).

The base station 120 may be an evolved base station (also called eNB) adopted in the 4G system. Or the base station 120 may be a base station (also called gNB) adopting a centralized-distributed architecture in the 5G system. When the base station 120 adopts the centralized-distributed architecture, it usually includes a centralized unit (CU) and at least two distributed units (DUs). The centralized unit is provided with protocol stacks of a packet data convergence protocol (PDCP) layer, a radio link control (RLC) layer, and a media access control (MAC) layer. The distributed unit is provided with a physical (PHY) layer protocol stack. The specific implementation of base station 120 is not limited in the embodiments of the disclosure.

A wireless connection may be established between a base station 120 and user equipment 110 via a wireless air interface. In different implementations, the wireless air interface is a wireless air interface based on the 4G standard; or the wireless air interface is a wireless air interface based on the 5G standard. For example, the wireless air interface is a new radio; or the wireless air interface may be a wireless air interface based on the next generation mobile communication network technology standard of 5G.

In some embodiments, an End to End (E2E) connection may be established between user equipment 110, such as vehicle to vehicle (V2V) communication, vehicle to infrastructure (V2I) communication and vehicle to pedestrian (V2P) communication in vehicle to everything (V2X) communication.

Here, the above "user equipment" may be considered as the "terminal" in the following embodiments.

In some embodiments, the wireless communication system may further include a network management device 130.

Several base stations 120 are respectively connected to the network management device 130. The network management device 130 may be a core network device in the wireless communication system. For example, the network management device 130 may be a mobility management entity (MME) in an evolved packet core (EPC). Or the network management device may be other core network devices, such as a serving gateway (SGW), a public data network gateway (PGW), a policy and charging rules function (PCRF), or a home subscriber server (HSS). The embodiments of the disclosure do not limit the implementation of the network management device 130.

It should be noted that the core network device (or core network function) may include at least one of the following.
1. Access and Mobility Management Function (AMF). The main function of this network function (NF) is access management and mobility management of the user.
2. Session Management Function (SMF). The main function of this NF is session management, including terminal IP address allocation, session management, charging, user plane management and the like.
3. User plane function (UPF). The main function of this NF is to implement data forwarding, traffic statistics or QoS execution of the user plane.
4. Policy Control Function (PCF). The main function of this NF is to implement control policy management for the user, including QOS control, service access control, and the like.
5. Unified Data Management (UDM). The main function of this NF is to implement contract data management and roaming control for the user and the like.
6. Authorization Service Function (AUSF). The main function of this NF is to implement the authentication function for the user. In order to facilitate the understanding of those skilled in the art, the embodiments of the disclosure list multiple implementations to clearly illustrate the technical solution of the embodiments of the disclosure. Certainly, those skilled in the art could understand that the multiple embodiments according to the disclosure may be performed separately, may be performed together with the methods of other embodiments in the disclosure or may be performed separately or in combination with some methods in other related arts. The above is not limited in the embodiments of the disclosure.

In order to better understand the embodiments of the disclosure, the following describes relevant scenarios.

Mobile media services, cloud augmented reality (AR) and virtual reality (VR) and other XR services, cloud games, video-based machine or drone remote control services are expected to contribute more and more traffic to the 5G network. XR services involve multimodal data flows. Multimodal data is data input from the same device or different devices (including sensors) that describe the same service or application, and these data may be output to one or more destination device terminals. The data flows in multimodal data often have a certain or even strong correlation, such as, the synchronization of audio and video streams, the synchronization of touch and vision, etc. There are some common characteristics among this type of media service data flows and other data flows, and among the network transmission requirements of these service data flows. The effective identification and utilization of these characteristics will be more conducive to the transmission and control of the network and services and will also be more conducive to service assurance and user experience.

XRM multi-flow collaborative QoS characteristics (such as round-trip delay, time difference, and SDFs delay jitter, etc.) require the network to support QoS monitoring of group SDFs, as well as unified subscription and reporting of corresponding QoS characteristics, thereby more accurately and effectively supporting AF's dynamic QoS perception and collaboration of group SDFs for XRM services. It should be noted that the multi-flow QoS parameter states such as delay and jitter of group SDFs in the network during actual business processes are dynamically and continuously changed by various factors in the network. Therefore, the real-time or quasi-real-time delay state of the network and the real-time delay requirements of AF services will directly affect the QoS authorization of each data flow, and even affect whether the 5GS XRM service function support may be successful.

In related arts, the 5GS system does not have a unified mechanism to support QoS monitoring of multiple SDFs, including the delay difference monitoring over two or more SDFs in the same direction, the round-trip delay monitoring over two SDFs, and the jitter of SDFs. As a result, the AF cannot perceive the actual QoS requirements of multiple SDFs of the service and cannot accurately update and implement multi-flow collaboration based on the received monitoring report.

As illustrated in FIG. 1B, embodiments of the disclosure provide a method for subscribing to QoS monitoring measurements. The method includes the following.

At step 11, the first network function sends first request information to the second network function, in which the first request information is used for requesting a subscription to QoS monitoring measurements obtained by monitoring the QoS of at least two SDFs.

At step 12, after receiving the first request information, the second network function sends authorized QoS monitoring policy information to the third network function, in which the QoS monitoring policy information is used for monitoring the QoS of the at least two SDFs.

At step 13, after receiving the QoS monitoring policy information, the third network function sends QoS reporting rule information to the RAN and/or the fourth network function.

At step 14, the fourth network function obtains a QoS monitoring report based on the QoS reporting rule information and sends the QoS monitoring report to the third network function.

At step 15, after receiving the QoS monitoring report, the third network function sends the QoS monitoring report to the second network function.

At step 16, after receiving the QoS monitoring report, the second network function sends the QoS monitoring report to the first network function.

In an embodiment, the first network function may be an AF, the second network function may be a PCF, the third network function is an SMF, and the fourth network function is a UPF.

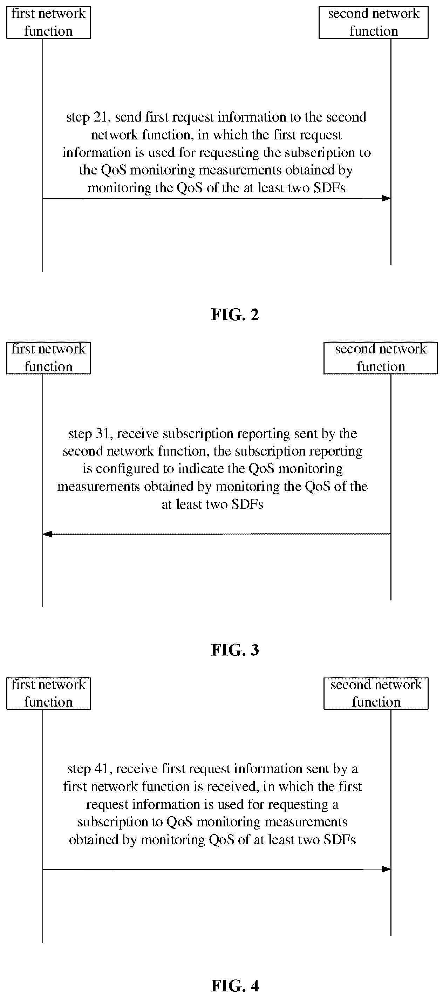

As illustrated in FIG. 2, embodiments of the disclosure provide a method for subscribing to QoS monitoring measurements. The method is performed by a first network function, and the method includes the following.

At step 21, first request information is sent to the second network function.

The first request information is used for requesting the subscription to the QoS monitoring measurements obtained by monitoring the QoS of the at least two SDFs.

Here, the "terminal" involved in the disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of NR terminal (for example, a Release-17 (R17) NR terminal).

The first network device in the disclosure may be an AF. Certainly, the first network device may also be other network devices capable of implementing the AF function. The second network device in the disclosure may be a policy control function (PCF). Certainly, the second network device may also be other network devices capable of implementing the PCF function. The third network device in the disclosure may be a session management function (SMF). Certainly, the third network device may also be other network devices capable of implementing the SMF. The fourth network device in the disclosure may be a user plane function (UPF). Certainly, the fourth network device may also be other network devices capable of implementing the UPF. The above is not limited herein.

In an embodiment, during an AF QoS request procedure, the first request information is sent to the second network function. The first request information is used for requesting the subscription to the QoS monitoring measurements obtained by monitoring the QoS of the at least two SDFs.

In an embodiment, the first request information is sent to the second network function, in which the first request information is used for requesting the subscription to the QoS monitoring measurements that are obtained by monitoring the QoS of the at least two SDFs. Subscription reporting sent by the second network function is received, in which the subscription reporting is used for indicating the QoS monitoring measurements.

In an embodiment, the subscription reporting sent by the second network function is received, in which the subscription reporting is used for indicating the QoS monitoring measurements, and the QoS monitoring measurements includes a delay QoS parameter.

In an embodiment, the subscription reporting sent by the second network function is received, in which the subscription reporting is used for indicating the QoS monitoring measurements. The QoS monitoring measurements include at least one of: a delay difference over two SDFs in the same direction, a round-trip delay measurement over two SDFs and/or a jitter parameter of the SDF. It should be noted that the jitter parameter of the SDF may be jitter parameters of the same SDF at different times, which is not limited here.

In an embodiment, the first request information is sent to the second network function, in which the first request information is used for requesting the subscription to the QoS monitoring measurements obtained by monitoring the QoS of the at least two SDFs. The first request information is used for indicating at least one of: XRM service information, common identifier information for identifying a data flow group of an XRM service, address information of a terminal, identifier information of the terminal, AF identifier application identity, traffic description information, a data network name (DNN), single network slice selection assistance information (S-NSSAI), and/or a QoS parameter.

In an embodiment, the first request information is sent to the second network function, in which the first request information is used for requesting the subscription to the QoS monitoring measurements obtained by monitoring the QoS of at least two SDFs. QoS monitoring information is sent to the second network function, in which the QoS monitoring information is used for monitoring the QoS of the at least two SDFs.

In an embodiment, the first request information is sent to the second network function, in which the first request information is used for requesting the subscription to the QoS monitoring measurements obtained by monitoring the QoS of at least two SDFs. QoS monitoring information is sent to the second network function, in which the QoS monitoring information is used for monitoring the QoS of the at least two SDFs. The QoS monitoring information indicates at least one of: a correlation identifier, a QoS monitoring key, a monitoring model, a monitoring type, a QoS monitoring level, a delay threshold for the SDF, a time difference threshold over SDFs, a maximum allowed delay jitter threshold for the SDF, a start time or an end time of QoS monitoring, an indication for simultaneously applying the QoS monitoring, a simultaneous reporting indication of the QoS monitoring, and/or a reset period of the QoS monitoring.

In an embodiment, the QoS monitoring information may be included in the first request information. For example, the first request information is sent to the second network function, in which the first request information is used for requesting the subscription to the QoS monitoring measurements obtained by monitoring the QoS of the at least two SDFs. The first request information includes QoS monitoring information, and the QoS monitoring information is used for monitoring the QoS of the at least two SDFs.

In the embodiments of the disclosure, the first request information is sent to the second network function, in which the first request information is used for requesting the subscription to the QoS monitoring measurements obtained by monitoring the QoS of the at least two SDFs. Here, since the first network function sends to the second network function the first request information for requesting the subscription to the QoS monitoring measurements obtained by monitoring the QoS of the at least two SDFs, such that the first network function may obtain the QoS monitoring measurements sent by the second network function with respect to the first request message. Compared with the situation where the QoS monitoring measurements cannot be obtained, the coordination between multiple service data flows may be accurately performed based on the QoS monitoring measurements.

It should be noted that those skilled in the art may understand that the methods according to the embodiments of the disclosure may be performed alone or together with some methods in the embodiments of the disclosure or some methods in related arts.

As illustrated in FIG. 3, embodiments of the disclosure provide a method for subscribing to QoS monitoring measurements. The method is performed by a first network function, and the method includes the following.

At step 31, subscription reporting sent by the second network function is received.

The subscription reporting is configured to indicate the QoS monitoring measurements obtained by monitoring the QoS of the at least two SDFs.

In an embodiment, the first request information is sent to the second network function, in which the first request information is used for requesting the subscription to the QoS monitoring measurements obtained by monitoring the QoS of the at least two SDFs. The subscription reporting sent by the second network function is received, in which the subscription reporting is configured to indicate the QoS monitoring measurements.

In an embodiment, the subscription reporting sent by the second network function is received, in which the subscription reporting is configured to indicate the QoS monitoring measurements, and the QoS monitoring measurements include delay QoS parameter(s).

In an embodiment, the subscription reporting sent by the second network function is received, in which the subscription reporting is configured to indicate the QoS monitoring measurements, and the QoS monitoring measurements include at least one of: a delay difference over two SDFs in the same direction, a round-trip delay measurement over two SDFs, and/or a jitter parameter of the SDF. It should be noted that the jitter parameter of the SDF may be jitter parameters of the same SDF at different times, which is not limited here.

It should be noted that those skilled in the art may understand that the method according to the embodiments of the disclosure may be performed alone or together with some methods in the embodiments of the disclosure or some methods in related arts.

As illustrated in FIG. 4, embodiments of the disclosure provide a method for subscribing to QoS monitoring measurements. The method is performed by a second network function, and the method includes the following.

At step 41, first request information sent by a first network function is received.

The first request information is used for requesting a subscription to QoS monitoring measurements obtained by monitoring QoS of at least two SDFs.

Here, the "terminal" involved in the disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of NR terminal (for example, an R17 NR terminal).

The first network device in the disclosure may be an AF. Certainly, the first network device may also be other network devices capable of implementing the AF function. The second network device in the disclosure may be a policy control function (PCF). Certainly, the second network device may also be other network devices capable of implementing the PCF function. The third network device in the disclosure may be a session management function (SMF). Certainly, the third network device may also be other network devices capable of implementing the SMF. The fourth network device in the disclosure may be a user plane function (UPF). Certainly, the fourth network device may also be other network devices capable of implementing the UPF. The above is not limited herein.

In an embodiment, during AF QoS request procedure, the first request information sent by the first network function is received, in which the first request information is used for requesting the subscription to the QoS monitoring measurements obtained by monitoring the QoS of the at least two SDFs.

In an embodiment, the first request information sent by the first network function is received, in which the first request information is used for requesting the subscription to the QoS monitoring measurements obtained by monitoring the QoS of the at least two SDFs. A subscription reporting is sent to the first network function, in which the subscription reporting is configured to indicate the QoS monitoring measurements.

In an embodiment, the subscription reporting is sent to the first network function, in which the subscription reporting is configured to indicate the QoS monitoring measurements, and the QoS monitoring measurements include delay QoS parameter(s).

In an embodiment, the subscription reporting is sent to the first network function, in which the subscription reporting is used for indicating the QoS monitoring measurements. The QoS monitoring measurements include at least one of: a delay difference over two SDFs in the same direction, a round-trip delay measurement over two SDFs; and/or a jitter parameter of the SDF. It should be noted that the jitter parameter of the SDF may be jitter parameters of the same SDF at different times, which is not limited here.

In an embodiment, the first request information sent by a first network function is received, in which the first request information is used for requesting the subscription to the QoS monitoring measurements obtained by monitoring the QoS of the at least two SDFs. The first request information is used for indicating at least one of: XRM service information, common identifier information for identifying a data flow group of an XRM service, address information of a terminal, identifier information of the terminal, AF identifier application identity, traffic description information, a DNN, S-NSSAI, and/or a QoS parameter.

In an embodiment, the first request information sent by the first network function is received, in which the first request information is used for requesting the subscription to the QoS monitoring measurements obtained by monitoring the QoS of the at least two SDFs. The QoS monitoring information sent by the first network function is received, in which the QoS monitoring information is used for monitoring the QoS of the at least two SDFs.

In an embodiment, the first request information sent by the first network function is received, in which the first request information is used for requesting the subscription to the QoS monitoring measurements obtained by monitoring the QoS of the at least two SDFs. The QoS monitoring information sent by the second network function is received, in which the QoS monitoring information is used for monitoring the QoS of the at least two SDFs. The QoS monitoring information indicates at least one of: a correlation identifier, a QoS monitoring key, a monitoring model, a monitoring type, a QoS monitoring level, a delay threshold for the SDF, a time difference threshold over SDFs, a maximum allowable delay jitter threshold for the SDF, a start time or an end time of QoS monitoring, an indication for simultaneously applying the QoS monitoring, a simultaneous reporting indication of the QoS monitoring, and/or a reset period of the QoS monitoring.

In an embodiment, the QoS monitoring information may be included in the first request information. For example, the first request information sent by the first network function is received, in which the first request information is used for requesting the subscription to the QoS monitoring measurements obtained by monitoring the QoS of the at least two SDFs. The first request information includes QoS monitoring information, and the QoS monitoring information is used for monitoring the QoS of the at least two SDFs.

In an embodiment, the first request information sent by the first network function is received, in which the first request information is used for requesting the subscription to the QoS monitoring measurements obtained by monitoring the QoS of the at least two SDFs. Based on the first request information, monitoring information used for monitoring the QoS of the at least two SDFs is determined.

In an embodiment, the first request information sent by the first network function is received, in which the first request information is used for requesting the subscription to the QoS monitoring measurements obtained by monitoring the QoS of the at least two SDFs. Based on the first request information, the QoS monitoring information used for monitoring the QoS of the at least two SDFs is determined. The QoS monitoring information is configured to indicate at least one of: a correlation identifier, a QoS monitoring key, a monitoring model, a monitoring type, a QoS monitoring level, a delay threshold for the SDF, a time difference threshold over SDFs, a maximum allowed delay jitter threshold for the SDF, a start time or an end time of QoS monitoring, an indication for simultaneously applying the QoS monitoring, a simultaneous reporting indication of the QoS monitoring, and/or a reset period of QoS monitoring.

It should be noted that the monitoring information may include any number of unified QoS monitoring control instances associated with a subscriber. In each unified QoS monitoring, the control instance is mandatory to include the QoS monitoring key. In some examples, a reset period is provided. It only applies to QoS monitoring control instances that periodically reset the allowed QoS delay (e.g., five minutes, daily, etc.). If the reset period is not specified, the QoS monitoring control instance ends when threshed data is consumed or when the end time is reached. The QoS monitoring related information is used by the PCF.

In an embodiment, the first request information sent by the first network function is received, in which the first request information is used for requesting the subscription to the QoS monitoring measurements obtained by monitoring the QoS of the at least two SDFs. Based on the first request information and local configuration information, the monitoring information used for monitoring the QoS of the at least two SDFs is determined.

In an embodiment, the first request information sent by the first network function is received, in which the first request information is used for requesting the subscription to the QoS monitoring measurements obtained by monitoring the QoS of the at least two SDFs. Based on the first request information and local configuration information, the monitoring information used for monitoring the QoS of the at least two SDFs is determined. The QoS monitoring information is configured to indicate at least one of: a correlation identifier, a QoS monitoring key, a monitoring model, a monitoring type, a QoS monitoring level, a delay threshold for the SDF, a time difference threshold over SDFs, a maximum allowed delay jitter threshold for the SDF, a start time or an end time of QoS monitoring, an indication for simultaneously applying the QoS monitoring, a simultaneous reporting indication of the QoS monitoring, and/or a reset period of the QoS monitoring.

In an embodiment, the first request information sent by the first network function is received, in which the first request information is used for requesting the subscription to the QoS monitoring measurements obtained by monitoring the QoS of the at least two SDFs. The authorized QoS monitoring policy information for monitoring the QoS of the at least two SDFs is sent to a third network function.

In an embodiment, the first request information sent by the first network function is received, in which the first request information is used for requesting the subscription to the QoS monitoring measurements obtained by monitoring the QoS of the at least two SDFs. Through a policy and charging control (PCC) rule, the authorized QoS monitoring policy information is sent to the third network function, in which the QoS monitoring policy information is used for monitoring the QoS of the at least two SDFs.

In an embodiment, the first request information sent by the first network function is received, in which the first request information is used for requesting the subscription to the QoS monitoring measurements obtained by monitoring the QoS of the at least two SDFs. The authorized QoS monitoring policy information for monitoring the QoS of the at least two SDFs is sent to the third network function. The QoS monitoring measurements sent by the third network function are received.

In an embodiment, the first request information sent by the first network function is received, in which the first request information is used for requesting the subscription to the QoS monitoring measurements obtained by monitoring the QoS of the at least two SDFs. An event trigger for the QoS report is requested.

In an embodiment, the first request information sent by the first network function is received, in which the first request information is used for requesting the subscription to the QoS monitoring measurements obtained by monitoring the QoS of the at least two SDFs. An event trigger for the QoS report is requested. The threshold information is sent to the third network function, in which the threshold information indicates at least one of: a delay threshold, a time difference threshold, and/or a jitter threshold.

In an embodiment, the first request information sent by the first network function is received, in which the first request information is used for requesting the subscription to the QoS monitoring measurements obtained by monitoring the QoS of the at least two SDFs. It is determined whether to monitor the QoS of the at least two SDFs, and/or the start time or the end time of monitoring the QoS of the at least two SDFs is determined.

It should be noted that those skilled in the art may understand that the method according to the embodiments of the disclosure may be executed alone or together with some methods in the embodiments of the disclosure or some methods in related arts.

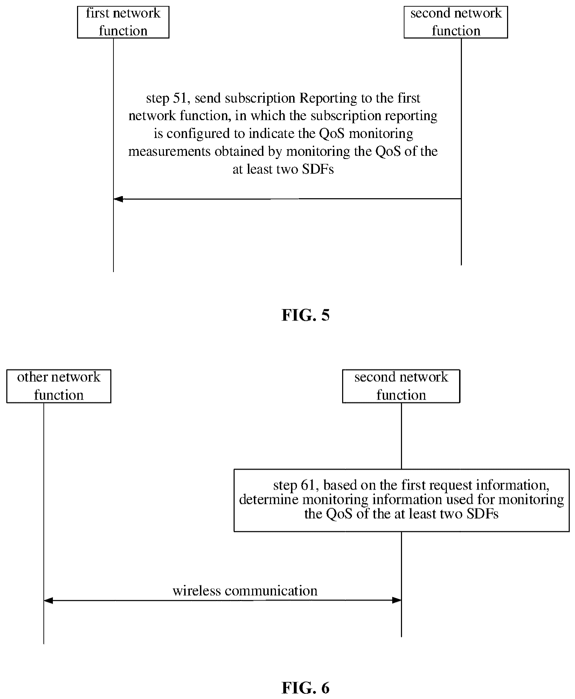

As illustrated in FIG. 5, embodiments of the disclosure provide a method for subscribing to QoS monitoring measurements. The method is performed by a second network function, and the method includes the following.

At step 51, subscription reporting is sent to the first network function.

The subscription reporting is configured to indicate the QoS monitoring measurements obtained by monitoring the QoS of the at least two SDFs.

In an embodiment, the first request information sent by the first network function is received, in which the first request information is used for requesting the subscription to the QoS monitoring measurements obtained by monitoring the QoS of the at least two SDFs. The subscription reporting is sent to the first network function, in which the subscription reporting is used for indicating the QoS monitoring measurements.

In an embodiment, the subscription reporting is sent to the first network function, in which the subscription reporting is used for indicating the QoS monitoring measurements, and the QoS monitoring measurements include delay QoS parameter(s).

In an embodiment, the subscription reporting is sent to the first network function, in which the subscription reporting is configured to indicate the QoS monitoring measurements. The QoS monitoring measurements include at least one of: a delay difference over two SDFs in the same direction, a round-trip delay measurement over two SDFs, and/or a jitter parameter of the SDF. It should be noted that the jitter parameter of the SDF may be jitter parameters of the same SDF at different times, which is not limited here.

It should be noted that those skilled in the art may understand that the method according to the embodiments of the disclosure may be performed alone or together with some methods in the embodiments of the disclosure or some methods in related arts.

As illustrated in FIG. 6, embodiments of the disclosure provide a method for subscribing to QoS monitoring measurements. The method is performed by a second network function, and the method includes the following.

At step 61, based on the first request information, monitoring information used for monitoring the QoS of the at least two SDFs is determined.

In an embodiment, the first request message sent by a first network function is received, in which the first request message is used for requesting the subscription to the QoS monitoring measurements obtained by monitoring the QoS of the at least two SDFs. Based on the first request information, the monitoring information used for monitoring the QoS of the at least two SDFs is determined.

In an embodiment, the first request information sent by the first network function is received, in which the first request information is used for requesting the subscription to the QoS monitoring measurements obtained by monitoring the QoS of the at least two SDFs. Based on the first request information, the monitoring information used for monitoring the QoS of the at least two SDFs is determined. The QoS monitoring information is configured to indicate at least one of: a correlation identifier, a QoS monitoring key, a monitoring model, a monitoring type, a QoS monitoring level, a delay threshold for the SDF, a time difference threshold over SDFs, a maximum allowed delay jitter threshold for the SDF, a start time or an end time of QoS monitoring, an indication for simultaneously applying the QoS monitoring, a simultaneous reporting indication of the QoS monitoring, and/or a reset period of the QoS monitoring.

In an embodiment, the first request information sent by the first network function is received, in which the first request information is used for requesting the subscription to the QoS monitoring measurements obtained by monitoring the QoS of the at least two SDFs. Based on the first request information and local configuration information, the monitoring information used for monitoring the QoS of the at least two SDFs is determined.

In an embodiment, the first request information sent by the first network function is received, in which the first request information is used for requesting the subscription to the QoS monitoring measurements obtained by monitoring the QoS of the at least two SDFs. Based on the first request information and local configuration information, the monitoring information used for monitoring the QoS of the at least two SDFs is determined. The QoS monitoring information is configured to indicate at least one of: a correlation identifier, a QoS monitoring key, a monitoring model, a monitoring type, a QoS monitoring level, a delay threshold for the SDF, a time difference threshold over SDFs, a maximum allowed delay jitter threshold for the SDF, a start time or an end time of QoS monitoring, an indication for simultaneously applying the QoS monitoring, a simultaneous reporting indication of the QoS monitoring, and/or a reset period of the QoS monitoring.

It should be noted that those skilled in the art may understand that the method according to the embodiments of the disclosure may be performed alone or together with some methods in the embodiments of the disclosure or some methods in related arts.

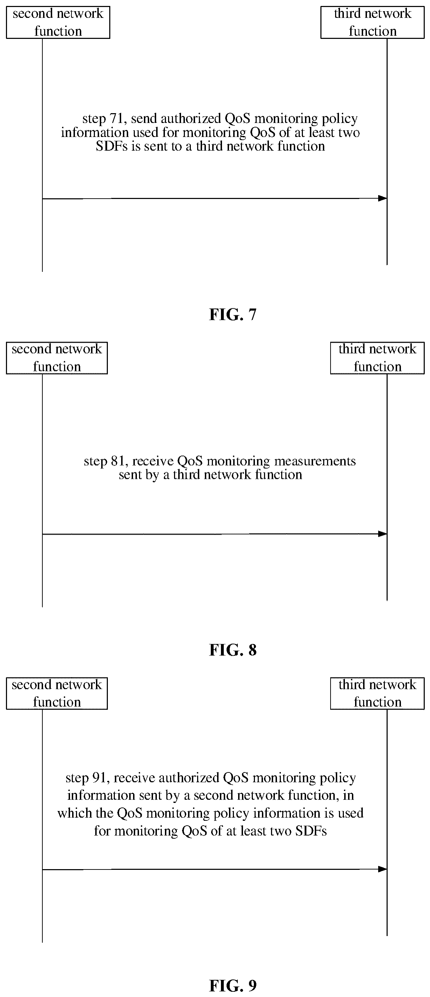

As illustrated in FIG. 7, embodiments of the disclosure provide a method for subscribing to QoS monitoring measurements. The method is performed by a second network function, and the method includes the following.

At step 71, authorized QoS monitoring policy information used for monitoring QoS of at least two SDFs is sent to a third network function.

In an embodiment, first request information sent by a first network function is received, in which the first request information is used for requesting a subscription to QoS monitoring measurements obtained by monitoring the QoS of at least two SDFs. Authorized QoS monitoring policy information used for monitoring the QoS of the at least two SDFs is sent to a third network function.

In an embodiment, the first request information sent by the first network function is received, in which the first request information is used for requesting the subscription to the QoS monitoring measurements obtained by monitoring the QoS of the at least two SDFs. Through a policy and charging control (PCC) rule, the authorized QoS monitoring policy information is sent to a third network function, in which the QoS monitoring policy information is used for monitoring the QoS of the at least two SDFs.

In an embodiment, the first request information sent by the first network function is received, in which the first request information is used for requesting the subscription to the QoS monitoring measurements obtained by monitoring the QoS of the at least two SDFs. The authorized QoS monitoring policy information used for monitoring the QoS of the at least two SDFs is sent to the third network function. The QoS monitoring measurements sent by the third network function are received.

It should be noted that those skilled in the art may understand that the method according to the embodiments of the disclosure may be performed alone or together with some methods in the embodiments of the disclosure or some methods in related arts.

As illustrated in FIG. 8, embodiments of the disclosure provide a method for subscribing to QoS monitoring measurements. The method is performed by a second network function, and the method includes the following.

At step 81, QoS monitoring measurements sent by a third network function are received.

In an embodiment, first request information sent by a first network function is received, in which the first request message is used for requesting a subscription to QoS monitoring measurements obtained by monitoring QoS of at least two SDFs. Through a PCC rule, authorized QoS monitoring policy information is sent to a third network function, in which the authorized QoS monitoring policy information is used for monitoring the QoS of the at least two SDFs. The QoS monitoring measurements sent by the third network function are received.

In an embodiment, first request information sent by the first network function is received, in which the first request information is used for requesting the subscription to the QoS monitoring measurements obtained by monitoring the QoS of the at least two SDFs. Authorized QoS monitoring policy information used for monitoring the QoS of the at least two SDFs is sent to the third network function. The QoS monitoring measurements sent by the third network function are received.

It should be noted that those skilled in the art may understand that the method according to the embodiments of the disclosure may be performed alone or together with some methods in the embodiments of the disclosure or some methods in related arts.

As illustrated in FIG. 9, embodiments of the disclosure provide a method for subscribing to QoS monitoring measurements. The method is performed by a third network function, and the method includes the following.

At step 91, authorized QoS monitoring policy information sent by a second network function is received.

The QoS monitoring policy information is used for monitoring QoS of at least two SDFs.

Here, the "terminal" involved in the disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a predetermined version of NR terminal (for example, an R17 NR terminal).

The first network device in the disclosure may be an AF. Certainly, the first network device may also be other network devices capable of implementing the AF function. The second network device in the disclosure may be a PCF. Certainly, the second network device may also be other network devices capable of implementing the PCF function. The third network device in the disclosure may be a SMF. Certainly, the third network device may also be other network devices capable of implementing the SMF. The fourth network device in the disclosure may be a UPF. Certainly, the fourth network device may also be other network devices capable of implementing the UPF. The above is not limited here.

In an embodiment, the authorized QoS monitoring policy information sent by the second network function is received through a PCC rule, in which the QoS monitoring policy information is used for monitoring the QoS of the at least two SDFs.

In an embodiment, the authorized QoS monitoring policy information sent by the second network function is received, in which the QoS monitoring policy information is used for monitoring the QoS of the at least two SDFs. Based on the QoS monitoring policy information, configuration information for performing QoS monitoring measurement of the at least two SDFs transmitted by a fourth network function is determined, and the configuration information includes a QoS reporting rule (QRR).

In an embodiment, the authorized QoS monitoring policy information sent by the second network function is received, in which the QoS monitoring policy information is used for monitoring the QoS of the at least two SDFs. A radio access network (RAN) and/or the fourth network function are started to perform monitoring and measurement of the QoS parameter for the QoS of the at least two SDFs.

In an embodiment, the authorized QoS monitoring policy information sent by the second network function is received, in which the QoS monitoring policy information is used for monitoring the QoS of the at least two SDFs, and QoS reporting rule information is sent to the RAN and/or the fourth network function.

In an embodiment, the authorized QoS monitoring policy information sent by the second network function is received, in which the QoS monitoring policy information is used for monitoring the QoS of the at least two SDFs. The RAN and/or the fourth network function are started to perform monitoring and measurement of QOS parameter for the QoS of at least two SDFs. The QoS monitoring report sent by the RAN and/or the fourth network function is received, in which the QoS monitoring report carries the QoS monitoring measurements obtained by monitoring the QoS of the at least two SDFs.

In an embodiment, the authorized QoS monitoring policy information sent by the second network function is received, in which the QoS monitoring policy information is used for monitoring the QoS of the at least two SDFs. The RAN and/or the fourth network function are started to perform monitoring and measurement of QOS parameter for the QoS of the at least two SDFs. The QoS monitoring report sent by the RAN and/or the fourth network function is received, in which the QoS monitoring report carries the QoS monitoring measurements obtained by monitoring the QoS of the at least two SDFs. The QoS monitoring measurements include delay QoS parameter(s).

In an embodiment, the authorized QoS monitoring policy information sent by the second network function is received, in which the QoS monitoring policy information is used for monitoring the QoS of the at least two SDFs. The RAN and/or the fourth network function are started to perform monitoring and measurement of the QoS parameter for the QoS of the at least two SDFs. The QoS monitoring report sent by the RAN and/or the fourth network function is received, in which the QoS monitoring report carries the QoS monitoring measurements obtained by monitoring the QoS of the at least two SDFs. The QoS monitoring measurements include at least one of: a delay difference over two SDFs in the same direction, a round-trip delay measurement over two SDFs, and/or a jitter parameter of the SDF.

In an embodiment, the authorized QoS monitoring policy information sent by the second network function is received, in which the QoS monitoring policy information is used for monitoring the QoS of the at least two SDFs. The RAN and/or the fourth network function are started to perform monitoring and measurement of the QoS parameter for the QoS of the at least two SDFs The QoS monitoring report sent by the RAN and/or the fourth network function is received, in which the QoS monitoring report carries the QoS monitoring measurements obtained by monitoring the QoS of the at least two SDFs. The QoS monitoring measurements are sent to the second network function.

In an embodiment, the QoS monitoring report is requested based on a QoS monitoring key and a QoS trigger. The QoS monitoring report sent by the RAN and/or the fourth network function is received, in which the QoS monitoring report carries the QoS monitoring measurements obtained by monitoring the QoS of the at least two SDFs.

In an embodiment, the QoS monitoring report is requested based on the QoS monitoring key and the QoS trigger. The QoS reporting rule for the QoS monitoring key within active PCC rule(s) is generated correspondingly to receive the QoS monitoring report sent by the RAN and/or the fourth network function, in which the QoS monitoring report carries the QoS monitoring measurements obtained by monitoring the QoS of the at least two SDFs. It should be noted that the QoS monitoring key may be derived from mapping of a common ID or an XRM service ID, mainly used to associate the data flows for performing the QoS monitoring.

In an embodiment, the authorized QoS monitoring policy information sent by the second network function is received, in which the QoS monitoring policy information is used for monitoring the QoS of the at least two SDFs. Trigger event information is sent to a fourth network function, in which the trigger event information is configured to indicate a time when the fourth network function sends the QoS monitoring report. The QoS monitoring report sent by the RAN and/or the fourth network function is received, in which the QoS monitoring report carries the QoS monitoring measurements obtained by monitoring the QoS of the at least two SDFs.

It should be noted that those skilled in the art may understand that the method according to the embodiments of the disclosure may be performed alone or together with some methods in the embodiments of the disclosure or some methods in related arts.

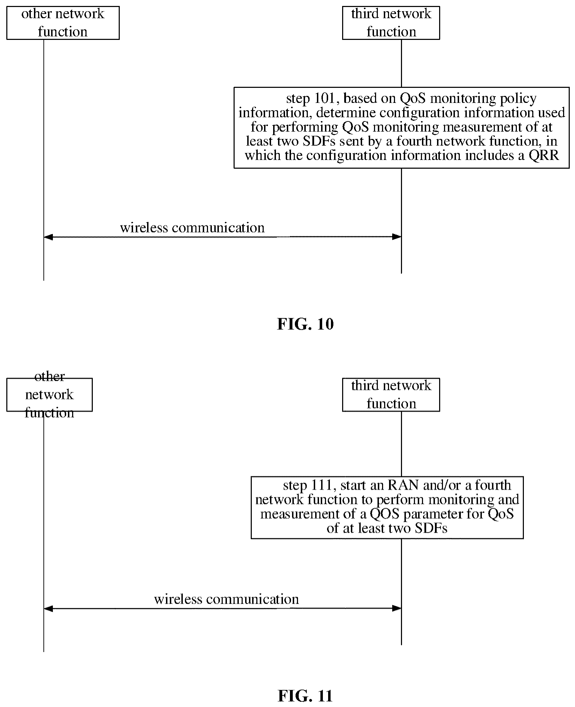

As illustrated in FIG. 10, embodiments of the disclosure provide a method for subscribing to QoS monitoring measurements. The method is performed by a third network function, and the method includes the following.

At step 101, based on QoS monitoring policy information, configuration information for performing QoS monitoring measurement of at least two SDFs sent by a fourth network function is determined, in which the configuration information includes a QoS reporting rule (QRR).

In an embodiment, authorized QoS monitoring policy information sent by a second network function is received, in which the QoS monitoring policy information is used for monitoring QoS of at least two SDFs. The configuration information used for performing QoS monitoring measurement of the at least two SDFs transmitted by the fourth network function is determined based on the QoS monitoring policy information, and the configuration information includes a QRR.

It should be noted that those skilled in the art may understand that the method according to the embodiments of the disclosure may be performed alone or together with some methods in the embodiments of the disclosure or some methods in related arts.

As illustrated in FIG. 11, embodiments of the disclosure provide a method for subscribing to QoS monitoring measurements. The method is performed by a third network function, and the method includes the following.

At step 111, an RAN and/or a fourth network function is started to perform monitoring and measurement of a QOS parameter for QoS of at least two SDFs.

In an embodiment, the authorized QoS monitoring policy information sent by the second network function is received, in which the QoS monitoring policy information is used for monitoring the QoS of the at least two SDFs. The RAN and/or the fourth network function is started to perform the monitoring and measurement of the QOS parameter for the QoS of the at least two SDFs. The QoS monitoring report sent by the RAN and/or the fourth network function is received, in which the QoS monitoring report carries the QoS monitoring measurements obtained by monitoring the QoS of the at least two SDFs.

In an embodiment, the authorized QoS monitoring policy information sent by the second network function is received, in which the QoS monitoring policy information is used for monitoring the QoS of the at least two SDFs. The RAN and/or the fourth network function is started to perform the monitoring and measurement of the QOS parameter for the QoS of the at least two SDFs. The QoS monitoring report sent by the RAN and/or the fourth network function is received, in which the QoS monitoring report carries the QoS monitoring measurements obtained by monitoring the QoS of the at least two SDFs. The QoS monitoring measurements include delay QoS parameter(s).

In an embodiment, the authorized QoS monitoring policy information sent by the second network function is received, in which the QoS monitoring policy information is used for monitoring the QoS of the at least two SDFs. The RAN and/or the fourth network function is started to perform the monitoring and measurement of the QOS parameter for the QoS of the at least two SDFs. The QoS monitoring report sent by the RAN and/or the fourth network function is received, in which the QoS monitoring report carries the QoS monitoring measurements obtained by monitoring the QoS of the at least two SDFs. The QoS monitoring measurements include at least one of: a delay difference over two SDFs in the same direction, a round-trip delay measurement over two SDFs, and/or a jitter parameter of the SDF.

In an embodiment, the authorized QoS monitoring policy information sent by the second network function is received, in which the QoS monitoring policy information is used for monitoring the QoS of the at least two SDFs. The RAN and/or the fourth network function is started to perform the monitoring and measurement of a QOS parameter for the QoS of the at least two SDFs. The QoS monitoring report sent by the RAN and/or the fourth network function is received, in which the QoS monitoring report carries the QoS monitoring measurements obtained by monitoring the QoS of the at least two SDFs. The QoS monitoring measurements include sent to a second network function.

It should be noted that those skilled in the art may understand that the method according to the embodiments of the disclosure may be performed alone or together with some methods in the embodiments of the disclosure or some methods in related arts.

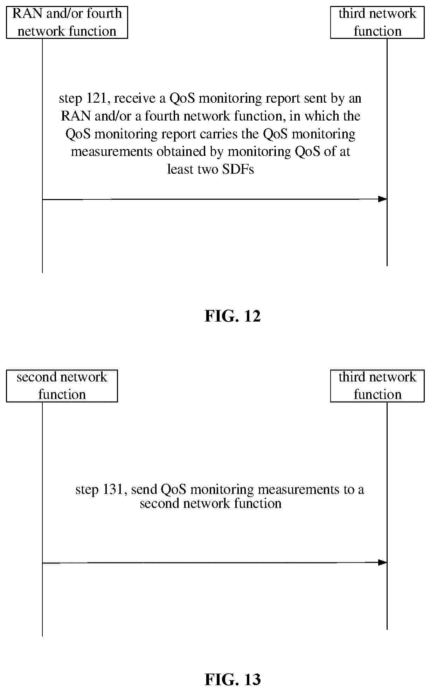

As illustrated in FIG. 12, embodiments of the disclosure provide a method for subscribing to QoS monitoring measurements. The method is performed by a third network function, and the method includes the following.

At step 121, a QoS monitoring report sent by an RAN and/or a fourth network function is received.

The QoS monitoring report carries the QoS monitoring measurements obtained by monitoring QoS of at least two SDFs.

In an embodiment, authorized QoS monitoring policy information sent by a second network function is received, in which the QoS monitoring policy information is used for monitoring the QoS of the at least two SDFs. QoS reporting rule information is sent to the RAN and/or the fourth network function. The QoS monitoring report sent by the RAN and/or the fourth network function is received, in which the QoS monitoring report carries the QoS monitoring measurements obtained by monitoring the QoS of the at least two SDFs.

In an embodiment, the authorized QoS monitoring policy information sent by the second network function is received, in which the QoS monitoring policy information is used for monitoring the QoS of the at least two SDFs. The QoS reporting rule information is sent to the RAN and/or the fourth network function. The QoS monitoring report sent by the RAN and/or the fourth network function is received, in which the QoS monitoring report carries the QoS monitoring measurements obtained by monitoring the QoS of the at least two SDFs. The QoS monitoring measurements include delay QoS parameter(s).

In an embodiment, the authorized QoS monitoring policy information sent by the second network function is received, in which the QoS monitoring policy information is used for monitoring the QoS of the at least two SDFs. The QoS reporting rule information is sent to the RAN and/or the fourth network function. The QoS monitoring report sent by the RAN and/or the fourth network function is received, in which the QoS monitoring report carries the QoS monitoring measurements obtained by monitoring the QoS of the at least two SDFs. The QoS monitoring measurements include at least one of: a delay difference over two SDFs in the same direction, a round-trip delay measurement over two SDFs, and/or a jitter parameter of the SDF.

In an embodiment, the authorized QoS monitoring policy information sent by the second network function is received, in which the QoS monitoring policy information is used for monitoring the QoS of the at least two SDFs. The QoS reporting rule information is sent to the RAN and/or the fourth network function. The QoS monitoring report sent by the RAN and/or the fourth network function is received, in which the QoS monitoring report carries the QoS monitoring measurements obtained by monitoring the QoS of the at least two SDFs. The QoS monitoring measurements are sent to the second network function.

It should be noted that those skilled in the art may understand that the method according to the embodiments of the disclosure may be performed alone or together with some methods in the embodiments of the disclosure or some methods in related arts.

As illustrated in FIG. 13, embodiments of the disclosure provide a method for subscribing to QoS monitoring measurements. The method is performed by a third network function, and the method includes the following.

At step 131, QoS monitoring measurements are sent to a second network function.

In an embodiment, authorized QoS monitoring policy information sent by the second network function is received, in which the QoS monitoring policy information is used for monitoring QoS of at least two SDFs. An RAN and/or a fourth network function is started to perform monitoring and measurement of a QoS parameter for the QoS of the at least two SDFs. A QoS monitoring report sent by the RAN and/or the fourth network function is received, in which the QoS monitoring report carries the QoS monitoring measurements obtained by monitoring the QoS of the at least two SDFs. The QoS monitoring measurements are sent to the second network function.

In an embodiment, the authorized QoS monitoring policy information sent by the second network function is received, in which the QoS monitoring policy information is used for monitoring the QoS of the at least two SDFs. The QoS reporting rule information is sent to the RAN and/or the fourth network function. The QoS monitoring report sent by the RAN and/or the fourth network function is received, in which the QoS monitoring report carries the QoS monitoring measurements obtained by monitoring the QoS of the at least two SDFs. The QoS monitoring measurements are sent to the second network function.

It should be noted that those skilled in the art may understand that the method according to the embodiments of the disclosure may be performed alone or together with some methods in the embodiments of the disclosure or some methods in related arts.

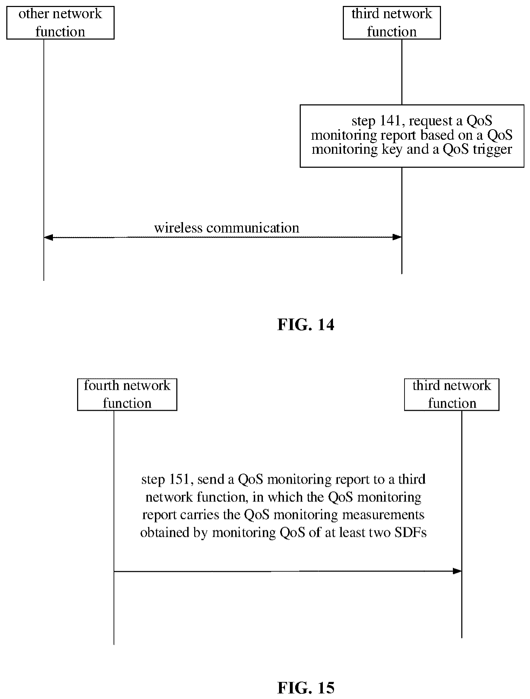

As illustrated in FIG. 14, embodiments of the disclosure provide a method for subscribing to QoS monitoring measurements. The method is performed by a third network function, and the method includes the following.

At step 141, a QoS monitoring report is requested based on a QoS monitoring key and a QoS trigger.

In an embodiment, the QoS monitoring report is requested based on the QoS monitoring key and the QoS trigger. The QoS monitoring report sent by the RAN and/or the fourth network function is received, in which the QoS monitoring report carries QoS monitoring measurements obtained by monitoring QoS of at least two SDFs.

In an embodiment, the QoS monitoring report is requested based on the QoS monitoring key and the QoS trigger. The QoS reporting rule for the QoS monitoring key within active PCC rule(s) is generated correspondingly to receive the QoS monitoring report sent by the RAN and/or the fourth network function, in which the QoS monitoring report carries the QoS monitoring measurements obtained by monitoring the QoS of the at least two SDFs. It should be noted that the QoS monitoring key may be derived from mapping of a common ID or an XRM service ID, mainly used to associate the data flows for performing the QoS monitoring.

It should be noted that those skilled in the art may understand that the method according to the embodiments of the disclosure may be performed alone or together with some methods in the embodiments of the disclosure or some methods in related arts.

As illustrated in FIG. 15, embodiments of the disclosure provide a method for subscribing to QoS monitoring measurements. The method is performed by a fourth network function, and the method includes the following.

At step 151, a QoS monitoring report is sent to a third network function.

The QoS monitoring report carries the QoS monitoring measurements obtained by monitoring QoS of at least two SDFs.

Here, the "terminal" involved in the disclosure may be, but is not limited to, a mobile phone, a wearable device, a vehicle-mounted terminal, an RSU, a smart home terminal, an industrial sensor device and/or a medical device, etc. In some embodiments, the terminal may be a Redcap terminal or a predetermined version of NR terminal (for example, an R17 NR terminal).

The first network device in the disclosure may be an AF. Certainly, the first network device may also be other network devices capable of implementing the AF function. The second network device in the disclosure may be a PCF. Certainly, the second network device may also be other network devices capable of implementing the PCF function. The third network device in the disclosure may be an SMF. Certainly, the third network device may also be other network devices capable of implementing the SMF. The fourth network device in the disclosure may be a UPF. Certainly, the fourth network device may also be other network devices capable of implementing the UPF. No limitation is made here.

In an embodiment, the QoS monitoring report is sent to a third network function, in which the QoS monitoring report carries the QoS monitoring measurements obtained by monitoring QoS of at least two SDFs. The QoS monitoring measurements include delay QoS parameter(s).

In an embodiment, the QoS monitoring report is sent to the third network function, in which the QoS monitoring report carries the QoS monitoring measurements obtained by monitoring the QoS of at least two SDFs. The QoS monitoring measurements include at least one of: a delay difference over two SDFs in the same direction, a round-trip delay measurement over two SDFs, and/or a jitter parameter of the SDF.

In an embodiment, the QoS monitoring report is obtained and sent to a third network function, in which the QoS monitoring report carries the QoS monitoring measurements obtained by monitoring the QoS of the at least two SDFs.

In an embodiment, the QoS monitoring report is sent to the third network function based on the QoS monitoring key and the QoS report trigger, in which the QoS monitoring report carries the QoS monitoring measurements obtained by monitoring the QoS of the at least two SDFs.

In an embodiment, the QoS monitoring report is sent to the third network function based on the QoS reporting rule (QRR), in which the QoS monitoring report carries the QoS monitoring measurements obtained by monitoring the QoS of the at least two SDFs. For example, the QRR indicates a rule for determining delay information, time difference information and/or jitter information.

In an embodiment, the QoS monitoring report is sent to the third network function based on trigger event information; in which the QoS monitoring report carries the QoS monitoring measurements obtained by monitoring the QoS of the at least two SDFs.

In an embodiment, the trigger event information sent by the third network function is received, in which the trigger event information is configured to indicate a time when the fourth network function sends the QoS detection report. The QoS monitoring report is sent to the third network function based on the trigger event information.

It should be noted that those skilled in the art may understand that the method according to the embodiments of the disclosure may be performed alone or together with some methods in the embodiments of the disclosure or some methods in related arts.

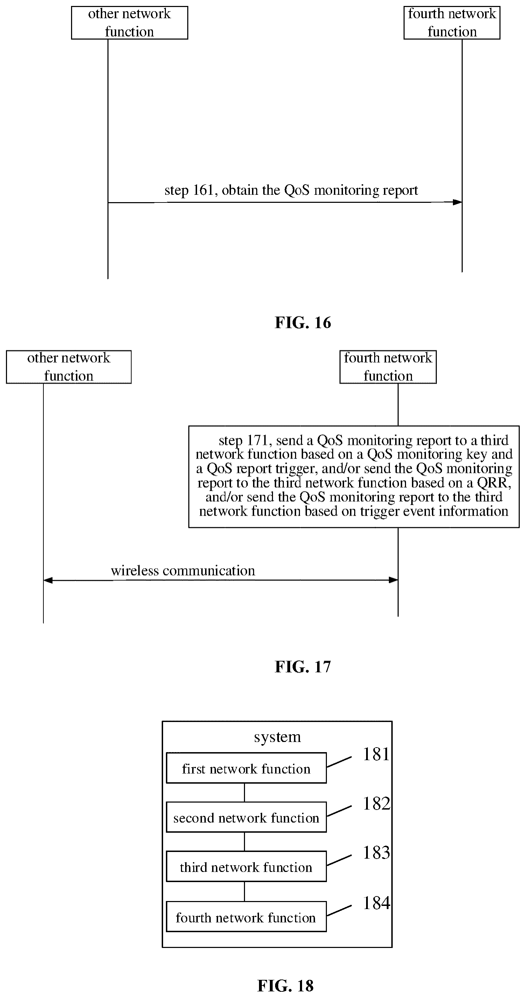

As illustrated in FIG. 16, embodiments of the disclosure provide a method for subscribing to QoS monitoring measurements. The method is performed by a fourth network function, and the method includes the following.

At step 161, a QoS monitoring report is obtained.

In an embodiment, the QoS monitoring report is obtained and sent to a third network function, in which the QoS monitoring report carries QoS monitoring measurements obtained by monitoring QoS of at least two SDFs.

It should be noted that those skilled in the art may understand that the method according to the embodiments of the disclosure may be performed alone or together with some methods in the embodiments of the disclosure or some methods in related arts.

As illustrated in FIG. 17, embodiments of the disclosure provide a method for subscribing to QoS monitoring measurements. The method is performed by a fourth network function, and the method includes the following.

At step 171, a QoS monitoring report is sent to a third network function based on a QoS monitoring key and a QoS report trigger, and/or the QoS monitoring report is sent to the third network function based on a QoS reporting rule (QRR), and/or the QoS monitoring report is sent to the third network function based on trigger event information.

In an embodiment, the QoS monitoring report is sent to the third network function based on the QoS monitoring key and the QoS report trigger; in which the QoS monitoring report carries the QoS monitoring measurements obtained by monitoring the QoS of the at least two SDFs.

In an embodiment, the QoS monitoring report is sent to the third network function based on the QRR, in which the QoS monitoring report carries the QoS monitoring measurements obtained by monitoring the QoS of the at least two SDFs. For example, the QRR indicates a rule for determining delay information, time difference information and/or jitter information.

In an embodiment, the QoS monitoring report is sent to the third network function based on the trigger event information, in which the QoS monitoring report carries the QoS monitoring measurements obtained by monitoring the QoS of the at least two SDFs.

In an embodiment, the trigger event information sent by the third network function is received, in which the trigger event information is configured to indicate a time when the fourth network function sends the QoS monitoring report. The QoS monitoring report is sent to the third network function based on the trigger event information.

It should be noted that those skilled in the art may understand that the method according to the embodiments of the disclosure may be performed alone or together with some methods in the embodiments of the disclosure or some methods in related arts.

As illustrated in FIG. 18, embodiments of the disclosure provide a system. The system includes a first network function 181, a second network function 182, a third network function 183 and a fourth network function 184. The first network function 181 is configured to perform the methods implemented by the first network function 181 in the disclosure. The second network function 182 is configured to perform the methods implemented by the second network function 182 in the disclosure. The third network function 183 is configured to perform the methods implemented by the third network function 183 in the disclosure. The fourth network function 184 is configured to perform the methods implemented by the fourth network function 184 in the disclosure.

In order to better understand the embodiments of the disclosure, the technical solution of the disclosure is further described below through an example embodiment.

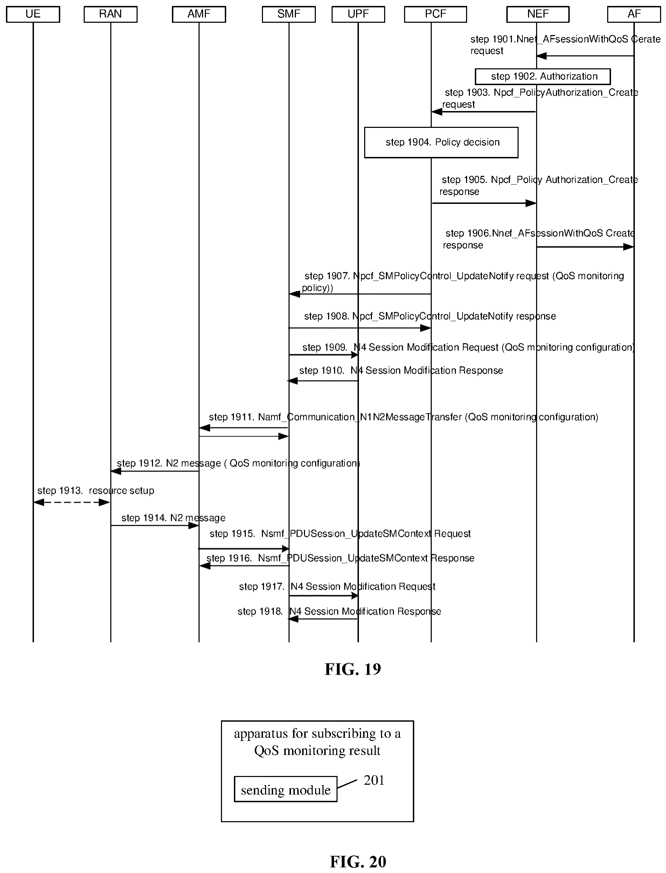

As illustrated in FIG. 19, embodiments of the disclosure provide a method for subscribing to QoS monitoring measurements. The method includes the following.

At step 1901, an AF sends an AF session resource request through, for example, Nnef_AFsessionWithQoS_Create request, to create an AF request (i.e., "the first request information"). In detail, the first request information is sent to the second network function, in which the first request information is used for requesting the subscription to the QoS monitoring measurements obtained by monitoring the QoS of at least two SDFs. Correspondingly, the subscription reporting sent by the second network function is received, in which the subscription reporting is used for indicating the QoS monitoring measurements.

In an example, XRM service information, common ID information for identifying the XRM service data flow group, UE address or UE Identifier, AF Identifier Application ID, Flow description(s), a DNN, S-NSSAI, a QoS parameter or other corresponding information is carried. Here, the common ID may be used to identify all flows in the XRM service group.

It should be noted that, in an embodiment, the AF will also send the QoS monitoring information to the PCF. For example, the QoS monitoring information may be included in the first request information. For example, the first request information is sent to the second network function, in which the first request information is used for requesting the subscription to the QoS monitoring measurements obtained by monitoring the QoS of the at least two SDFs. The first request information includes QoS monitoring information, and the QoS monitoring information is used for monitoring the QoS of the at least two SDFs.

In an embodiment, the QoS monitoring information is configured to indicate at least one of: a correlation identifier, a QoS monitoring key, a Monitoring model, a monitoring type, a QoS monitoring level, a delay threshold of SDFs, a time difference threshold over SDFs, a maximum allowed delay jitter threshold for the SDF, a start time or an end time of the QoS monitoring, an indication for simultaneously applying the QoS monitoring, a simultaneous reporting indication of the QoS monitoring, and/or a reset period of the QoS monitoring.

At step 1902, the NEF authorizes the AF request. If it is an untrusted AF, the AF request is sent to the PCF via the NEF. For example, the NEF performs relevant mappings, including mapping of XRM service (AF-Service-Identifier) to DNN and S-NSSAI, mapping of external application to CN application identifier; mapping of external UE identifier to UE identifier (such as SUPI) in CN based on UDM subscription information, and mapping of external to internal XRM service group identifier based on UDM subscription information).

At step 1903, the NEF triggers Npcf_PolicyAuthorization_Create request, sends the AF request to the PCF, and carries QoS requirement information for PCF to make a policy decision. The message carries corresponding joint QoS subscription information.

At step 1904, the PCF determines the monitoring strategy. The PCF may determine that updated or new policy information needs to be sent to the SMF.

At step 1905, the PCF responds to the NEF a Npcf_Policy Authorization_Create response.

At step 1906, the NEF sends a Nnef_AFsessionWithQoS_Create response message to the AF.

At step 1907, the PCF initiates an SM policy association modification request (PCC rule (QoS monitoring policy)) to the SMF. Based on the QoS monitoring policy for measurement from the PCF, the SMF generates the QoS monitoring configuration for UPF (and RAN, if needed), as described in step 1904.

At step 1908, the SMF replies an SM policy association modification response to PCF.

At step 1909, the SMF initiates an N4 session modification request (QoS monitoring configuration, as shown in Table 1 below) to the UPF.

**Table 1:**

| **Attribute** | **Description** | **Comment** |
|---|---|---|
| Rule ID | Unique identifier to identify this information | Used by UPF when reporting QoS monitoring |
| Reporting triggers | One or multiple of the events can be activated for the generation and reporting the QoS report | Applicable events include: |
| | | - Start/stop of traffic detection with/without application instance identifier and deduced SDF filter reporting; |
| | | Periodic measurement threshold reached; |
| | | the RT delay/time difference/jitter measurement threshold reached; |
| | | Immediate report requested; |
| | | Measurement of marked UL/DL traffic; |
| | | End marker packet has been received. |
| Periodic measurement threshold | Defines the point in time for sending a periodic report for this QRR (e.g., time of day, or the periodic time). | This allows generation of periodic QoS monitoring report for the RT delay/Time difference/jitter. It can also be used for realizing the Monitoring time of the QoS monitoring feature. |
| RT delay measurement threshold | Value in terms of the delay threshold of the uplink and/or downlink when the measurement report is to be generated. | |
| Time difference measurement threshold | Value in terms of the time threshold between the traffics when the measurement report is to be generated. | |
| Jitter measurement threshold | Value in terms of the Jitter time threshold between the traffics when the measurement report is to be generated | |
| Correlated QRR ID(s) | Points to one or more other QRR ID. | This enables the generation of a combined QoS related Report for this and other QRRs by triggering their reporting. |
| QoS type to be Measured | Indicates the QoS information type to be measured, i.e. the RT delay, Time difference, Jitter. | |

At step 1910, upon reception of the QoS monitoring configuration, the UPF enables the measurement and report. The UPF(s) respond to the SMF.

At step 1911, for the SMF requested modification, the SMF invokes Namf_Communication_N1N2MessageTransfer ([N2 SM information] (PDU session ID, QFI(s), QoS profile(s), QoS monitoring configuration), N1 SM container)).

At step 1912, the AMF may send an N2 ([N2 SM information received from SMF], NAS message (PDU session ID, N1 SM container (PDU session modification command))) message to the (R)AN. Upon reception of the QoS monitoring configuration, the RAN enables event measurement and report (e.g., the RAN detects the UL delay and DL delay, and the sum of the UL PDB and DL PDB as the RT delay).

At step 1913, resources are set.

At step 1914, the (R)AN may acknowledge N2 PDU session request by sending an N2 PDU session Ack message to the AMF.

At step 1915, the AMF forwards the N2 SM information received from the AN to the SMF via the Nsmf_PDUSession_UpdateSMContext service operation.

At step 1916, the SMF replies with a Nsmf_PDUSession_UpdateSMContext response.

The SMF may update the N4 session of the UPF(s) that are involved by the PDU session modification by sending an N4 session modification request message to the UPF.

As illustrated in FIG. 20, embodiments of the disclosure provide an apparatus for subscribing to QoS monitoring measurements. The apparatus includes a sending module 201.

The sending module 201 is configured to send first request information to a second network function.

The first request information is used for requesting a subscription to the QoS monitoring measurements obtained by monitoring QoS of at least two SDFs.

It should be noted that those skilled in the art may understand that the method according to the embodiments of the disclosure may be performed alone or together with some methods in the embodiments of the disclosure or some methods in related arts.

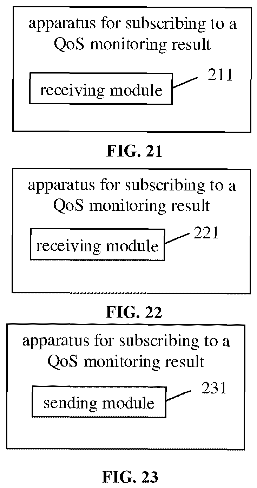

As illustrated in FIG. 21, embodiments of the disclosure provide an apparatus for subscribing to QoS monitoring measurements. The apparatus includes a receiving module 211.

The receiving module 211 is configured to receive first request information sent by a first network function.

The first request information is used for requesting a subscription to the QoS monitoring measurements obtained by monitoring QoS of at least two SDFs.

It should be noted that those skilled in the art may understand that the method according to the embodiments of the disclosure may be performed alone or together with some methods in the embodiments of the disclosure or some methods in related arts.

As illustrated in FIG. 22, embodiments of the disclosure provide an apparatus for subscribing to QoS monitoring measurements. The apparatus includes a receiving module 21.

The receiving module 221 is configured to receive authorized QoS monitoring policy information sent by a second network function.

The QoS monitoring policy information is used for monitoring QoS of at least two SDFs.

It should be noted that those skilled in the art may understand that the method according to the embodiments of the disclosure may be performed alone or together with some methods in the embodiments of the disclosure or some methods in related arts.

As illustrated in FIG. 23, embodiments of the disclosure provide an apparatus for subscribing to QoS monitoring measurements. The apparatus includes a sending module 231.

The sending module 231 is configured to send a QoS monitoring report to a third network function.

The QoS monitoring report carries the QoS monitoring measurements obtained by monitoring QoS of at least two SDFs.

It should be noted that those skilled in the art may understand that the method according to the embodiments of the disclosure may be performed alone or together with some methods in the embodiments of the disclosure or some methods in related arts.

The disclosure provides a communication device. The communication device includes a processor and a memory for storing processor-executable instructions.

The processor is configured to implement the method in any embodiment of the disclosure when running the executable instructions.

The processor may include various types of storage media, which are non-temporary computer storage media that may continue to memorize information stored thereon after the communication device is powered off.

The processor may be connected to the memory via a bus or the like to read the executable program stored in the memory.

Embodiments of the disclosure further provide a computer storage medium. The computer storage medium has a computer executable program stored thereon. When the executable program is executed by a processor, the method of any embodiment of the disclosure is performed.

Regarding the apparatuses in above embodiments, the specific manner in which each module performs operations has been described in detail in the method embodiments, and will not be elaborated here.

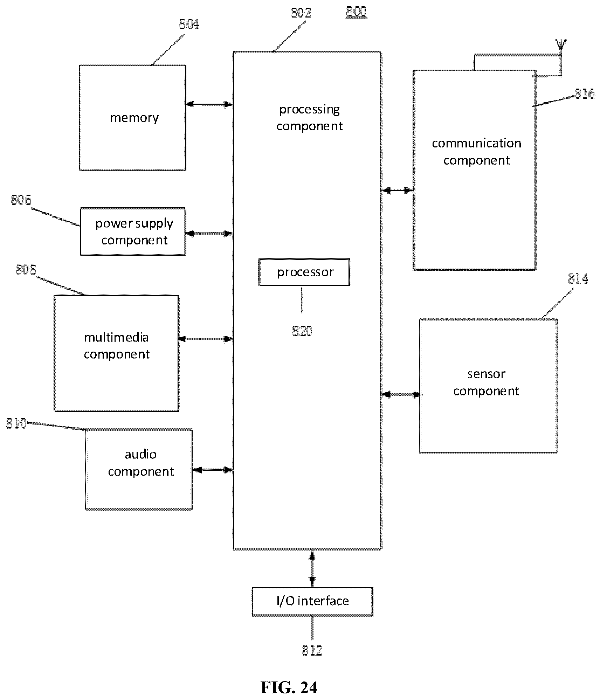

As illustrated in FIG. 24, embodiments of the disclosure provide a structure of a terminal.

As illustrated in FIG. 24, the terminal 800 is provided in embodiments of the disclosure, which may be a mobile phone, a computer, a digital broadcast terminal, a message sending and receiving device, a game console, a tablet device, a medical device, a fitness device, a personal digital assistant, etc.

As illustrated in FIG. 24, the terminal 800 may include one or more of the following components: a processing component 802, a memory 804, a power supply component 806, a multimedia component 808, an audio component 810, an input/output (I/O) interface 812, a sensor component 814, or a communication component 816.

The processing component 802 generally controls the overall operation of the terminal 800, such as operations associated with display, phone calls, data communications, camera operations, and recording operations. The processing component 802 may include one or more processors 820 to execute instructions to complete all or part of the steps of the above-mentioned methods. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the terminal 800. Examples of such data include instructions for any application or method operating on the terminal 800, contact data, phone book data, messages, pictures, videos, etc. The memory 804 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 806 provides power to various components of the terminal 800. The power supply component 806 may include a power management system, one or more power supplies, and other components associated with generating, managing, and distributing power to the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide action. In some embodiments, the multimedia component 808 includes a front-facing camera and/or a rear-facing camera. When the terminal 800 is in an operating mode, such as a shooting mode or a video mode, the front-facing camera and/or the rear-facing camera may receive external multimedia data. Each of the front-facing camera and the rear-facing camera may be a fixed optical lens system or have a focal length and optical zoom capability.

The audio component 810 is configured to output and/or input audio signals. For example, the audio component 810 includes a microphone (MIC). When the terminal 800 is in an operation mode, such as a call mode, a recording mode, and a speech recognition mode, the microphone is configured to receive an external audio signal. The received audio signal may be further stored in the memory 804 or sent via the communication component 816. In some embodiments, the audio component 810 also includes a speaker for outputting audio signals.

I/O interface 812 provides an interface between the processing component 802 and peripheral interface modules, such as keyboards, click wheels, buttons, etc. These buttons may include, but are not limited to, home button, volume button, start button, and lock button.

The sensor component 814 includes one or more sensors for providing various aspects of status assessment for the terminal 800. For example, the sensor component 814 may detect the open/closed state of the terminal 800, the relative positioning of the components, such as the display and keypad of the terminal 800, and the sensor component 814 may also detect the position change of the terminal 800 or a component of the terminal 800, the presence or absence of contact between the user and the terminal 800, the orientation or acceleration/deceleration of the terminal 800 and the temperature change of the terminal 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor or a temperature sensor.

The communication component 816 is configured to facilitate wired or wireless communication between the terminal 800 and other devices. The terminal 800 may access a wireless network based on a communication standard, such as Wireless Fidelity (Wi-Fi), 2G, 3G, or a combination thereof. In an example embodiment, the communication component 816 receives a broadcast signal or broadcast-related information from an external broadcast management system via a broadcast channel. In an example embodiment, the communication component 816 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology and other technologies.

In an example embodiment, the terminal 800 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above methods.

In an example embodiment, a non-transitory computer-readable storage medium including instructions is also provided, such as a memory 804 including instructions, and the instructions may be executed by the processor 820 of the terminal 800 to perform the above methods. For example, the non-transitory computer-readable storage medium may be a ROM, a random access memory (RAM), a CD-ROM, a magnetic tape, a floppy disk, an optical data storage device, etc.

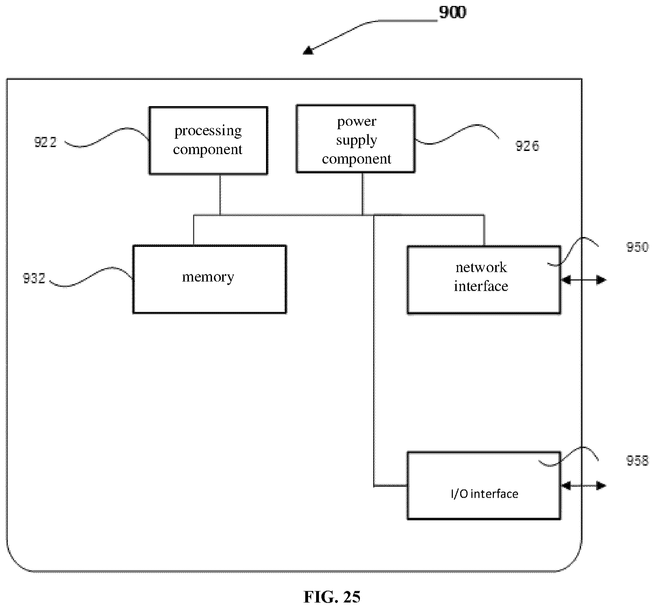

As illustrated in FIG. 25, embodiments of the disclosure illustrate a structure of a base station. For example, the base station 900 may be provided as a network-side device. As illustrated in FIG. 25, the base station 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to perform any method in the aforementioned methods performed by the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS X TM, Unix TM, Linux TM, FreeBSD TM or the like.

Those skilled in the art will readily appreciate other embodiments of the disclosure after considering the specification and practicing the disclosure herein. The disclosure is intended to cover any variations, uses or adaptations of the disclosure that follow the general principles of the disclosure and include common knowledge or customary techniques in the art that are not disclosed in the disclosure. The description and examples are to be considered illustrative only, and the true scope and spirit of the disclosure are indicated by the following claims.

It should be understood that the disclosure is not limited to the exact construction that has been described above and shown in the drawings and that various modifications and changes may be made without departing from the scope thereof. The scope of the disclosure is limited only by the appended claims.

## Claims

1. A method for subscribing to quality of service (QoS) monitoring measurements, performed by a first network function, the method comprising:
sending first request information to a second network function,
wherein the first request information is used for requesting a subscription to the QoS monitoring measurements obtained by monitoring QoS of at least two service data flows (SDFs).

2. The method of claim 1, wherein sending the first request information to the second network function comprises:
during a QoS request procedure of an application function (AF), sending the first request information to the second network function.

3. The method of claim 1, further comprising:
receiving subscription reporting sent by the second network function,
wherein the subscription reporting is used for indicating the QoS monitoring measurements.

4. The method of claim 1, wherein the QoS monitoring measurements comprise a delay QoS parameter.

5. The method of any one of claims 1 to 4, wherein the QoS monitoring measurements comprise at least one of:
a delay difference over two SDFs in the same direction;
a round-trip delay measurement over two SDFs; and/or
a jitter parameter of an SDF.

6. The method of claim 1, wherein the first request information is used for indicating at least one of:
extended reality multimedia (XRM) service information;
common identifier information for identifying a data flow group of an XRM service;
address information of a terminal;
identifier information of the terminal;
application function (AF) identifier application identity;
traffic description information;
a data network name (DNN);
single network slice selection assistance information (S-NSSAI); and/or
a QoS parameter.

7. The method of claim 1, further comprising:
sending QoS monitoring information to the second network function,
wherein the QoS monitoring information is used for monitoring the QoS of the at least two SDFs.

8. The method of claim 7, wherein the QoS monitoring information is used for indicating at least one of:
a correlation identifier;
a QoS monitoring key;
a monitoring model;
a monitoring type;
a QoS monitoring level;
a delay threshold for an SDF;
a time difference threshold over SDFs;
a maximum allowed delay jitter threshold for an SDF;
a start time or an end time of QoS monitoring;
an indication for simultaneously applying the QoS monitoring;
a simultaneous reporting indication of the QoS monitoring; and/or
a reset period of the QoS monitoring.

9. A method for subscribing to quality of service (QoS) monitoring measurements, performed by a second network function, the method comprising:
receiving first request information sent by a first network function,
wherein the first request information is used for requesting a subscription to the QoS monitoring measurements obtained by monitoring QoS of at least two service data flows (SDFs).

10. The method of claim 9, wherein receiving the first request information sent by the first network function comprises:
during a QoS request procedure of an application function (AF), receiving the first request information sent by the first network function.

11. The method of claim 9, further comprising:
sending subscription reporting to the first network function,
wherein the subscription reporting is used for indicating the QoS monitoring measurements.

12. The method of claim 9, wherein the QoS monitoring measurements comprise a delay QoS parameter.

13. The method of any one of claims 9 to 12, wherein the QoS monitoring measurements comprise at least one of:
a delay difference over two SDFs in the same direction;
a round-trip delay measurement over two SDFs; and/or
a jitter parameter of an SDF.

14. The method of claim 9, wherein the first request information is used for indicating at least one of:
extended reality multimedia (XRM) service information;
common identifier information for identifying a data flow group of an XRM service;
address information of a terminal;
identifier information of the terminal;
application function (AF) identifier application identity;
traffic description information;
a data network name (DNN);
single network slice selection assistance information (S-NSSAI); and/or
a QoS parameter.

15. The method of claim 9, further comprising:
receiving QoS monitoring information sent by the first network function,
wherein the QoS monitoring information is used for monitoring the QoS of the at least two SDFs.

16. The method of claim 9, further comprising:
determining QoS monitoring information used for monitoring the QoS of the at least two SDFs based on the first request information.

17. The method of claim 16, wherein determining the QoS monitoring information used for monitoring the QoS of the at least two SDFs based on the first request information comprises:
determining the QoS monitoring information used for monitoring the QoS of the at least two SDFs based on the first request information and local configuration information.

18. The method of any one of claims 15 to 17, wherein the QoS monitoring information is used for indicating at least one of:
a correlation identifier;
a QoS monitoring key;
a monitoring model;
a monitoring type;
a QoS monitoring level;
a delay threshold of an SDF;
a time difference threshold over SDFs;
a maximum allowed delay jitter threshold for the SDF;
a start time or an end time of QoS monitoring;
an indication for simultaneously applying the QoS monitoring;
a simultaneous reporting indication of the QoS monitoring; and/or
a reset period of the QoS monitoring.

19. The method of claim 9, further comprising:
sending authorized QoS monitoring policy information used for monitoring the QoS of the at least two SDFs to a third network function.

20. The method of claim 19, wherein sending the authorized QoS monitoring policy information used for monitoring the QoS of the at least two SDFs to the third network function comprises:
sending the authorized QoS monitoring policy information to the third network function via a policy and charging control (PCC) rule,
wherein the authorized QoS monitoring policy information is used for monitoring the QoS of the at least two SDFs.

21. The method of claim 19, further comprising:
receiving the QoS monitoring measurements sent by the third network function.

22. The method of claim 9, further comprising:
requesting an event trigger of a QoS report.

23. The method of claim 22, further comprising:
sending threshold information to a third network function,
wherein the threshold information is used for indicating at least one of:
a delay threshold;
a time difference threshold; and/or
a jitter threshold.

24. The method of claim 22, further comprising:
determining whether to monitor the QoS of the at least two SDFs; and/or
determining a start time or an end time of monitoring the QoS of the at least two SDFs.

25. A method for subscribing to quality of service (QoS) monitoring measurements, performed by a third network function, the method comprising:
receiving authorized QoS monitoring policy information sent by a second network function,
wherein the authorized QoS monitoring policy information is used for monitoring QoS of at least two service data flows (SDFs).

26. The method of claim 25, wherein receiving the authorized QoS monitoring policy information sent by the second network function comprises:
receiving the authorized QoS monitoring policy information sent by the second network function via a policy and charging control (PCC) rule.

27. The method of claim 25, further comprising:
determining configuration information used for performing QoS monitoring and measurement of the at least two SDFs transmitted by a fourth network function, based on the authorized QoS monitoring policy information, wherein the configuration information comprises a QoS reporting rule (QRR).

28. The method of claim 25, further comprising:
starting a radio access network (RAN) and/or a fourth network function to perform monitoring and measurement of a QoS parameter for the QoS of the at least two SDFs.

29. The method of claim 28, wherein starting the RAN and/or the fourth network function to perform the monitoring and measurement of the QoS parameter for the QoS of the at least two SDFs comprises:
sending QoS reporting rule information to the RAN and/or the fourth network function.

30. The method of claim 28, further comprising:
receiving a QoS monitoring report sent by the RAN and/or the fourth network function,
wherein the QoS monitoring report carries QoS monitoring measurements obtained by monitoring the QoS of the at least two SDFs.

31. The method of claim 30, further comprising:
sending the QoS monitoring measurements to the second network function.

32. The method of claim 30, wherein the QoS monitoring measurements comprises a delayQoS parameter.

33. The method of any one of claims 31 to 32, wherein the QoS monitoring measurements comprise at least one of:
a delay difference over two SDFs in the same direction;
a round-trip delay measurement over two SDFs; and/or
a jitter parameter of an SDF.

34. The method of claim 30, further comprising:
requesting the QoS monitoring report based on a QoS monitoring key and a QoS trigger.

35. The method of claim 34, further comprising:
correspondingly generating a QoS reporting rule for the QoS monitoring key within an active policy and charging control (PCC) rule.

36. The method of claim 30, further comprising:
sending trigger event information to the fourth network function,
wherein the trigger event information is used for indicating a time when the fourth network function sends the QoS monitoring report.

37. A method for subscribing to quality of service (QoS) monitoring measurements, performed by a fourth network function, the method comprising:
sending a QoS monitoring report to a third network function,
wherein the QoS monitoring report carries the QoS monitoring measurements obtained by monitoring QoS of at least two service data flows (SDFs).

38. The method of claim 37, wherein the QoS monitoring measurements comprise a delay QoS parameter.

39. The method of any one of claims 37 to 38, wherein the QoS monitoring measurements comprise at least one of:
a delay difference over two SDFs in the same direction;
a round-trip delay measurement over two SDFs; and/or
a jitter parameter of an SDF.

40. The method of claim 37, further comprising:
obtaining the QoS monitoring report.

41. The method of claim 37, wherein sending the QoS monitoring report to the third network function comprises:
sending the QoS monitoring report to the third network function based on a QoS monitoring key and a QoS report trigger; and/or
sending the QoS monitoring report to the third network function based on a QoS reporting rule (QRR); and/or
sending the QoS monitoring report to the third network function based on trigger event information.

42. The method of claim 41, further comprising:
receiving the trigger event information sent by the third network function,
wherein the trigger event information is used for indicating a time when the fourth network function sends the QoS monitoring report.

43. The method of claim 41, wherein the QRR is used for indicating a rule for determining delay information, time difference information and/or jitter information.

44. The method of claim 43, wherein the QRR comprises at least one of:
a rule identifier;
a reporting trigger;
a periodic measurement threshold;
a round-trip (RT) delay measurement threshold;
a time difference measurement threshold;
a jitter measurement threshold;
a correlated QRR identifier; and/or
a QoS type to be measured.

45. A system, comprising a first network function, a second network function, a third network function and a fourth network function, wherein the first network function is configured to implement the method of any one of claims 1 to 6, the second network function is configured to implement the method of any one of claims 7 to 21, the third network function is configured to implement the method of any one of claims 22 to 33, and the fourth network function is configured to implement the method of any one of claims 34 to 41.

46. An apparatus for subscribing to quality of service (QoS) monitoring measurements, comprising:
a sending module, configured to send first request information to a second network function,
wherein the first request information is used for requesting a subscription to the QoS monitoring measurements obtained by monitoring QoS of at least two service data flows (SDFs).

47. An apparatus for subscribing to quality of service (QoS) monitoring measurements, comprising:
a receiving module, configured to receive first request information sent by a first network function,
wherein the first request information is used for requesting a subscription to the QoS monitoring measurements obtained by monitoring QoS of at least two service data flows (SDFs).

48. An apparatus for subscribing to quality of service (QoS) monitoring measurements, comprising:
a receiving module, configured to receive authorized QoS monitoring policy information sent by a second network function,
wherein the authorized QoS monitoring policy information is used for monitoring QoS of at least two service data flows (SDFs).

49. An apparatus for subscribing to quality of service (QoS) monitoring measurements, comprising:
a sending module, configured to send a QoS monitoring report to a third network function,
wherein he QoS monitoring report carries the QoS monitoring measurements obtained by monitoring QoS of at least two service data flows (SDFs).

50. A communication device, comprising:
an antenna,
a memory, and
a processor, connected to the antenna and the memory respectively, wherein the processor is configured to control transmission and reception of the antenna by executing computer executable instructions stored in the memory and to implement the method of any one of claims 1 to 8, 9 to 24, 25 to 36 or 37 to 44.

51. A computer storage medium, having computer executable instructions stored thereon, wherein after the computer executable instructions are executed by a processor, the method of any one of claims 1 to 8, 9 to 24, 25 to 36 or 37 to 44 is implemented.
